# EUROPEAN PATENT SPECIFICATION

(11) **EP 2 621 068 B1**
(45) Date of publication and mention of the grant of the patent: **22.08.2018**
(21) Application number: 12190881.8
(22) Date of filing: 31.10.2012
(51) Int. Cl.: G05F 1/46, H02M 3/156, H02M 3/158, H02M 1/00

(54) **Bypass control in a DC-to-DC converter**
Umleitungssteuerung in einem Gleichstromwandler
Commande de dérivation dans un convertisseur CC-CC

(30) Priority: 27.01.2012 US 201261591554 P
(43) Date of publication of application: 31.07.2013
(73) Proprietor: Dialog Semiconductor GmbH, 73230 Kirchheim (DE)
(72) Inventor: De Fazio, Michele, 82110 Germerin (DE)
(74) Representative: MERH-IP Matias Erny Reichl Hoffmann Patentanwälte PartG mbB

(56) References cited:
- EP-A1- 2 206 229
- EP-A2- 1 835 603
- WO-A1-2005/085969
- US-A1- 2006 001 410
- US-A1- 2006 022 653
- US-A1- 2006 192 536
- US-A1- 2010 231 190
- US-A1- 2010 253 309
- US-A1- 2011 234 187
- US-B1- 6 229 289
- US-B1- 7 982 445

## Description

### Technical Field

The present document relates to switched power supplies. In particular, the present document relates to a method and system for controlling one or more bypass transistors in a DC-to-DC step-down converter.

### Background

Buck converters are one example to provide for DC (Direct Current)-to-DC (step-down) voltage conversion. Depending on the requirements of a load connected to the buck converter, it may occur that the output voltage Vout of the buck converter is close to the input voltage Vin of the buck converter. This means that the buck converter may be operated at (or close to) a 100% duty cycle. In such cases, it is typically desirable to reduce the output voltage drop-out and to reduce the voltage drop at the components of the buck converter (e.g. a high side switch and an inductor). Alternatively or in addition, the buck converter may be submitted to fast load transients. The buck converter (or more generally the DC-to-DC converter) may be slow in responding to such load transient, due to the coil inertial to be charged. In such cases, it is typically desirable to reduce output voltage transients caused by the load transients.

In order to meet the above mentioned targets, a bypass transistor for bypassing the buck converter may be used. The bypass transistor may be used to assist the DC-to-DC converter to provide power to a load transient. In particular, the bypass transistor may be controlled to selectively provide additional current to the load. The enabling threshold for putting a bypass transistor into an on-state is normally a static value, which is e.g. compared to a feedback voltage Vfb derived from the output voltage Vout. Overall, it may be stated that the bypass transistor is typically controlled using the feedback voltage Vfb derived from the output voltage Vout. It has been observed by the inventor that a control loop solely based on the feedback voltage Vfb (i.e. solely based on a voltage value derived from the output voltage Vout) may lead to an unstable behaviour of the bypass transistor and the entire converter and/or may lead to excessive output voltage ripple.

The present document addresses the above mentioned shortcomings of such power supplies comprising a bypass transistor. In particular, the present document is directed at providing an automatic control for activating the bypass transistor in a stable manner and for reducing output voltage ripple in a power supply with bypass transistor. Overall, the present document is directed at improving the accuracy of the output voltage provided by a power supply, notably in terms of a fast dynamic response, a static operation and ripple.

US 2010/231190 A1 relates to a voltage regulator that has both a linear low drop out (LDO) regulator and a switch-mode converter. More particularly, the voltage regulator can select between the LDO regulator and switch-mode converter based upon load current.

### Summary

In view of some or all of these needs, the present document proposes a power converter and a method for converting an input voltage to an output voltage, having the features of the respective independent claims 1 and 9.

According to an aspect of the present disclosure, a power converter configured to convert an input voltage at an input of the power converter into an output voltage at an output of the power converter is described. Typically, the power converter is used to supply a load with a pre-determined load voltage (i.e. the output voltage) and a load current. The power converter may be a switched-mode power supply performing e.g. a step-down voltage conversion. The power converter may comprise a DC-to-DC converter (e.g. a buck converter) comprising a high side switch. Alternatively, the power converter may comprise a boost converter or a buck-boost converter (also comprising a high side switch). The high side switch may be a transistor, e.g. a PMOS or NMOS transistor.

Furthermore, the power converter may comprise a bypass transistor parallel to the DC-to-DC converter. The bypass transistor may be a transistor, e.g. a PMOS or NMOS transistor. The bypass transistor may be configured to couple a load at the output of the power converter to the input voltage during an on-state of the bypass transistor. As such, the bypass transistor may be a high side bypass transistor. It should be noted that the power converter may alternatively or in addition comprise a low side bypass transistor. Such a low side bypass transistor may be configured to couple a load at the output of the power converter to ground during an on-state of the low side bypass transistor. It should be noted that the aspects described in the context of a bypass transistor (e.g. a high side bypass transistor) are equally applicable to a low side bypass transistor. In the present document, the term "coupled" refers to elements being in electrical communication with each other, whether directly connected e.g., via wires, or in some other manner.

In addition, the power converter may comprise current sensing means configured to sense a current through the high side switch. Such current sensing means may be implemented e.g. using a current mirror formed using the high side switch. The bypass transistor may be controlled based at least on the sensed current through the high side switch. The controlling of the bypass transistor typically impacts the amount of current provided by the bypass transistor to the output of the power converter (i.e. the source to drain current of the bypass transistor).

The DC-to-DC converter may comprise an inductor which is configured to store energy to be provided to the load at the output of the power converter. The high side switch may be in series to the inductor and the high side switch may be configured to couple the inductor to the input voltage during an on-state of the high side switch (and to decouple the inductor from the input voltage during an off-state of the high side switch). Furthermore, the DC-to-DC converter may comprise a capacitor at the output of the power converter (arranged in parallel to the load of the power converter). The capacitor may be configured to smoothen ripples of the output voltage. The bypass transistor (i.e. the high side bypass transistor) may be configured to charge the capacitor parallel to the output of the power converter (if in an on-state). In addition, the DC-to-DC converter may comprise a low side switch configured to couple the inductor to ground during an on-state of the low side switch (and to decouple the inductor from ground during an off-state of the low side switch). Typically, the on/off states of the high side switch and the low side switch are controlled to be in opposed phase to each other. Furthermore, the on/off states of the high and low side switches may be repeated according to a pre-determined commutation cycle (wherein a commutation cycle typically comprises one on-state and one off-state of the high side switch and one off-state and one on-state of the low side switch). The frequency of the commutation cycle may be referred to as a cycle rate. The low side switch may be a NMOS or PMOS transistor or a diode (e.g. a Schottky diode).

The power converter may comprise a pulse generation unit configured to determine a duty cycle of the high side switch of the DC-to-DC converter based on the output voltage. The duty cycle of the high side switch may be defined as the ratio of the length of the on-state compared to the length of a complete commutation cycle. The pulse generation unit may determine the duty cycle at least based on the output voltage and based on the sensed current. In particular, the pulse generation unit may generate a pulse width modulated signal indicative of the duty cycle of the high side switch. Furthermore, the power converter may comprise a DC-to-DC converter controller unit configured to control the DC-to-DC converter based on the duty cycle received from the pulse generation unit (e.g. based on the pulse width modulated signal).

The power converter may comprise a saw wave signal generation unit configured to generate a saw wave signal at the cycle rate of the DC-to-DC converter. Using adding means, a feedback voltage may be determined by overlaying the saw wave signal and the sensed current. As such, the addition means may also provide for a conversion from a current signal to a voltage signal. Furthermore, the power converter may comprise a peak detector configured to determine a peak voltage from the feedback voltage. Hence, the bypass transistor may be controlled based at least on the peak voltage (derived from the sensed current). In an embodiment, the power supply comprises a reset unit configured to reset the peak detector, subject to receiving a reset command; and/or a leveling unit configured to adjust a level of the peak voltage. Alternatively or in addition, the power converter may comprise a valley detector configured to determine a valley voltage from the feedback voltage. The bypass transistor may be controlled based at least on the valley voltage.

The bypass transistor may be controlled also based on the output voltage. For this purpose, the power converter may comprise a voltage error detection unit configured to determine an error voltage based on the output voltage and a (constant) reference voltage. Furthermore, the power converter may comprise a difference unit configured to compare a first voltage derived from the output voltage (e.g. the error voltage or a level shifted version of the error voltage) with a second voltage derived from the sensed current (e.g. the peak voltage or a level shifted version of the peak voltage). Hence, the bypass transistor may be controlled based on an output of the difference unit.

The difference unit may be an operational amplifier and the output of the difference unit may be an analogue signal used to control the bypass transistor to provide an adjustable current to the output of the power converter. Alternatively, the difference unit may be a comparator and the output of the difference unit may be a binary signal used to control the on-state and an off-state of the bypass transistor.

Furthermore, the power converter may comprise a bypass control unit configured to control the bypass transistor in an analogue mode and/or in a binary switching mode, based at least on the sensed current through the high side switch (e.g. based on the output of the difference unit). In the analogue mode a current through the bypass transistor may be controlled in an analogue manner (thereby providing different continuous levels of current to the output of the power converter). In the binary switching mode the current through the bypass transistor may be controlled in a digital, on/off, manner.

According to another aspect of the present disclosure, a current feedback circuit configured to generate a .control signal for controlling a bypass transistor arranged in parallel to a DC-to-DC converter is described. The bypass transistor may be a transistor, e.g. a PMOS or NMOS transistor. The DC-to-DC converter typically comprises a high side switch. The current feedback circuit may comprise a peak detector configured to determine a peak voltage from a feedback voltage derived from a current through the high side switch of the DC-to-DC converter. Furthermore, the DC-to-DC converter may comprise a control signal generation unit configured to determine the control signal based at least on the peak voltage.

The control signal generation unit may comprises the above mentioned difference unit configured to compare the peak voltage to a first voltage derived from the output voltage of the DC-to-DC converter. Hence, the control signal may be determined based on an output of the difference unit. As described above, the current feedback circuit may further comprise at least one leveling unit configured to modify a level of the peak voltage.

According to another aspect of the present disclosure, a method for converting an input voltage into an output voltage is described. The method may comprise converting the input voltage into the output voltage using a DC-to-DC converter comprising a high side switch. Furthermore, the method may comprise controlling a bypass transistor parallel to the DC-to-DC converter to couple a load at an output of the DC-to-DC converter to the input voltage during an on-state of the bypass transistor. In addition, the method may comprise sensing a current through the high side switch. The controlling of the bypass transistor may be based at least on the sensed current through the high side switch.

According to a further aspect of the present disclosure, a power converter configured to convert an input voltage at an input of the power converter into an output voltage at an output of the power converter is described. The power converter may comprise a DC-to-DC converter comprising a low side switch. Furthermore, the power converter may
comprise a bypass transistor parallel to the DC-to-DC converter, configured to couple a load at the output of the power converter to ground during an on-state of the bypass transistor. The bypass transistor may be implemented as a source or emitter follower, or as a common source or emitter follower.

It should be noted that alternatively or in addition, the power converter may comprise a (high side) bypass transistor configured to couple a load at the output of the power converter to the input voltage during an on-state of the (high side) bypass transistor. The aspects described in the present document regarding a bypass transistor in general are equally applicable to a high side bypass transistor and a low side bypass transistor.

The power converter may further comprise current sensing means configured to sense a current through the low side switch. The bypass transistor may be controlled based at least on the sensed current through the low side switch. The controlling based on the sensed current through the low side switch may be performed in a similar manner to the controlling described in the context of the (high side) bypass transistor.

The DC-to-DC converter may be a multiphase DC-to-DC converter comprising a plurality of low side switches and a plurality of high side switches forming respective pairs of a high side switch and a low side switch. The respective pairs of switches may be operated at different commutation cycles. Alternatively, some or all of the respective pairs of switches may be operated at the same commutation cycles. The DC-to-DC converter may be a step-down converter. Alternatively, the DC-to-DC converter may be a step-up converter.

The power converter may further comprise a DC-to-DC converter control unit configured to control an on-state and an off-state of the low side switch of the DC-to-DC converter. Furthermore, the power converter may comprise a bypass control unit configured to control the on-state and off-state of the bypass transistor. The bypass control unit and the DC-to-DC converter control unit may be coupled via an analogue or digital communication interface, in order to provide for a coordinated operation of the DC-to-DC converter and the bypass transistor.

The bypass control unit may be configured to trigger the bypass transistor to switch into the on-state, subject to determining that the output voltage exceeds a predetermined voltage threshold. Alternatively or in addition, the bypass control unit may comprise a communication interface for communicating with a load of the power converter, thereby enabling the bypass control unit to prepare for an upcoming modification of the load.

The power converter may further comprise a bypass current sensing unit configured to sense a current through the bypass transistor, thereby providing a sensed bypass current. The bypass current sensing unit may comprise a current mirror. The bypass control unit may be configured to determine a gate voltage signal for the bypass transistor, based at least on the sensed bypass current. The power converter may further comprise an adjustable current source. The bypass control unit may be configured to determine the gate voltage signal also based on the adjustable current source.

The bypass control unit may be configured to determine the gate voltage signal such that the bypass transistor is operated in a linear mode or in a switched mode. Alternatively or in addition, the bypass control unit may be configured to determine the gate voltage signal such that the bypass current is reduced, subject to an increase of a voltage drop across the bypass transistor, thereby operating the bypass transistor in a safe operation area. Alternatively or in addition, the bypass control unit may be configured to determine the gate voltage signal such that a pre-determined slew rate of the bypass current is not exceeded.

As outlined above, the power converter may comprise a capacitor parallel to the output of the power converter. The (low side) bypass transistor may be configured to discharge the capacitor. The speed of discharge of the capacitor may be configurable or controllable. In particular, the sensed bypass current can be used to control the current through the (low side) bypass transistor, thereby controlling the rate of discharge. Furthermore, the bypass transistor may be configured to limit a current through the low side switch. In particular, the bypass transistor may be configured to limit a current flowing back from the output of the power converter to the DC-to-DC converter (i.e. notably to the low side switch). The sensed bypass current can be used to control the current through the (low side) bypass transistor, thereby limiting the current flowing back from the output of the power converter to the DC-to-DC converter.

It should be noted that the methods and systems including its preferred embodiments as outlined in the present document may be used stand-alone or in combination with the other methods and systems disclosed in this document. Furthermore, all aspects of the methods and systems outlined in the present document may be arbitrarily combined. In particular, the features of the claims may be combined with one another in an arbitrary manner.

### Short description of the Figures

The invention is explained below in an exemplary manner with reference to the accompanying drawings, wherein
Fig. 1 illustrates a circuit diagram of an example DC-to-DC converter with bypass control;
Fig. 2 shows a circuit diagram of an example peak detector;
Fig. 3 illustrates a flow diagram of an example method for converting an input voltage into an output voltage using a controlled bypass transistor of a DC-to-DC converter;
Fig. 4 shows a circuit diagram of an example power converter comprising a high side and a low side bypass transistor;
Fig. 5a illustrates a circuit diagram of an example power converter comprising bypass current sensing means;
Fig. 5b shows a circuit diagram of an example control and drive unit of a bypass transistor; and
Figs 5c and 5d show circuit diagrams of example feedback error signal determination units.

### Detailed Description

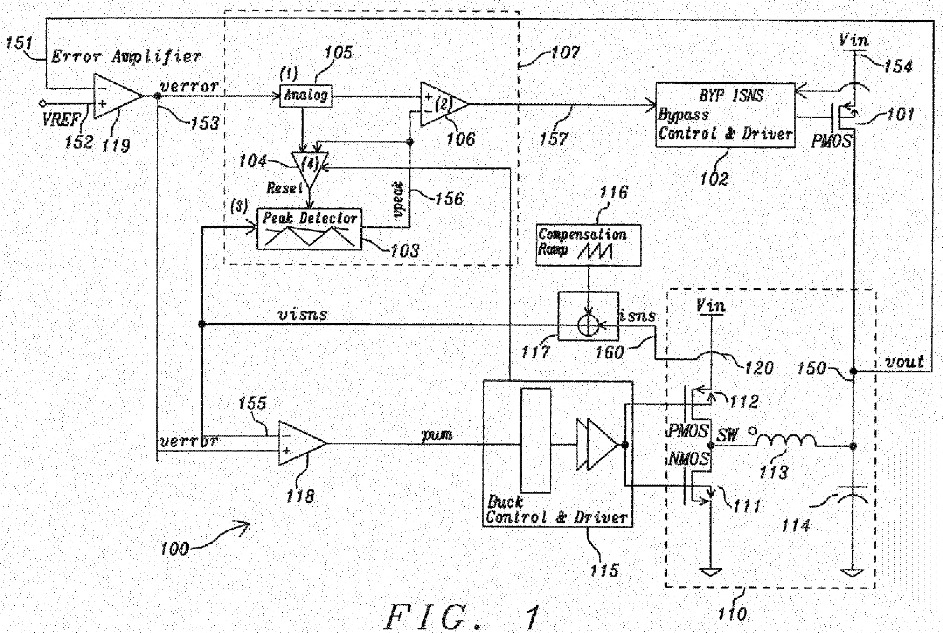

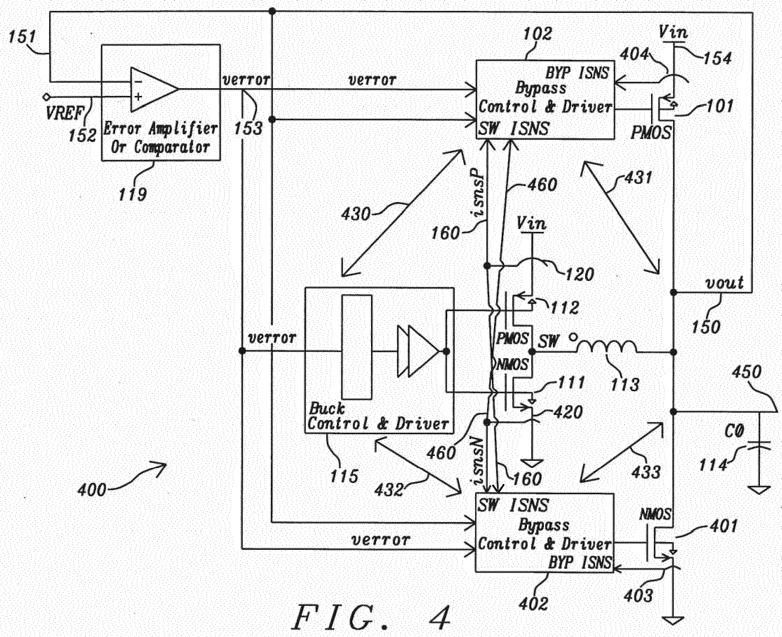

Fig. 1 shows an example buck converter system 100 with output bypass transistor 101. It should be noted that even though the following aspects are described in the context of a buck converter 110, the aspects are also applicable to other DC-to-DC converter, e.g. other DC-to-DC step-down converters or DC-to-DC step-up converters. Furthermore, even though Fig. 1 only comprises a (high side) bypass transistor 101, the aspects outlined in the context of a (high side) bypass transistor 101 are also applicable to a low side bypass transistor 401 (as illustrated e.g. in Fig. 4). The system 100 comprises a buck converter 110 comprising a high side switch 112 (e.g. a PMOS transistor) and a low side switch 111 (e.g. a NMOS transistor), as well as a buck inductor 113 and a buck capacitor 114. The duty cycle of the buck converter 110 (i.e. the duty cycle of the high side switch 112) is controlled via a feedback voltage Vfb 151 which is equal to (or proportional to) the output voltage Vout 150. The feedback voltage Vfb 151 is compared to a reference voltage Vref 152 using e.g. a differential amplification unit (also referred to as an error amplifier) 119, thereby providing an error voltage Verror 153. In stable operation, when the output voltage Vout 150 corresponds to the desired output voltage of the converter system 100, the error voltage Verror 153 should approximate zero or should take on a pre-determined default error value which may be tuned using the reference voltage Vref 152. However, in case of load transients, the output voltage Vout 150 may dip, thereby causing a bump in the error voltage Verror 153 above the default error value.

Overall, the error voltage Verror 153 may be used to regulate the output voltage Vout 150 provided by the converter system 100. The regulation of the output voltage Vout 150 may be achieved by controlling the duty cycle of the high side transistor 112. This duty cycle may be controlled using the error voltage Verror 153. For example, the error voltage Verror 153 may be compared with a saw wave voltage signal having a pre-determined cycle length. The cycle length typically corresponds to the cycle length of the buck converter 110 (i.e. the length of an on-state and a succeeding off-state of the high side switch 112). The saw wave voltage signal typically has a maximum voltage Vsaw at the peak of each saw tooth. The saw wave voltage signal is compared to the error voltage Verror 153 using comparator 118 (e.g. a hysteretic comparator), thereby generating a pulse width modulated signal which is negative (or zero) when the saw wave voltage signal is greater than Verror, and positive when the saw wave voltage is smaller than Verror. The transition from negative to positive may be taken as a trigger for the duty cycle. In particular, the pwm (pulse width modulated) signal generated by the comparator 118 may be converted by the buck control unit 115 to generate the drive signals for the high side switch 112 and the low side switch 111 of the buck converter 110. The regulator can be tuned by appropriately choosing the maximum voltage Vsaw and the reference voltage Vref 152 based on the input voltage Vin 154 and the desired output voltage 150.

The regulation of the duty cycle of the buck converter 110 can be enhanced by also taking into account the inductor current, i.e. the current through the inductor 113 of the buck converter. For this purpose, the converter system 100 comprises current sensing means 120 for sensing the current through the high side transistor 112 (which corresponds to the inductor current when the high side switch 112 is in on-state). The current sensing means 120 may e.g. be implemented as a current mirror, which mirrors and possibly amplifies the current through the high side switch 112. The sensed current Isns 160 provided by the current sensing means 120 is therefore typically proportional (or equal) to the current through the high side switch 112 (and the inductor 113, when the high side switch is in its on-state). At 100% duty cycle of the buck converter 110 and in stable operation, the current through the high side switch 112 is typically constant and corresponds to the input voltage Vin 154 divided by the impedance of the load Rload.

The sensed current Isns 160 is added in addition unit 117 to a saw wave signal having the cycle length of the buck converter 110. The adding unit 117 further converts the sum of the saw wave signal and the sensed current Isns 160 into a sensed saw wave voltage Visns 155. The saw wave signal may be generated by a saw wave generator 116 (comprising e.g. a switch (e.g. a transistor) in parallel to a capacitor). Overall, the saw wave generator 116 and the adding unit 117 provide the sensed saw wave voltage Visns 155 which comprises a periodic saw wave voltage signal (generated by the saw wave generator 116) which is offset by a voltage derived from the sensed current Isns 160. As indicated above, Isns 160 is a constant current in case of a stable operation of the buck converter 110 at 100% duty cycle. In such cases, the sensed saw wave voltage Visns 155 corresponds to the periodic saw wave voltage signal offset by a constant voltage derived from the constant current Isns 160. In case of a duty cycle lower than 100%, the sense current Isns is zero (when the high side switch 112 is in off-state) and has a saw like rising shape (when the high side switch 112 is in on-state). The saw like rising shape of the sense current Isns 160 during the on-state of the high side switch 112 results from the current throttling properties of the inductor 113. Hence, in cases of a duty cycle of less than 100%, the sensed saw wave voltage Visns 155 is obtained as an overlay of the periodic saw wave voltage signal and an intermittent saw shaped voltage derived from the sensed current Isns 160. It should be noted that the sensed saw wave voltage Visns 155 may be reset every time the high side switch 112 is switched off (e.g. using a reset provided in a subsequent peak detector 103). The reset of the sensed saw wave voltage Visns 155 may result in a cleaner signal. The sensed saw wave voltage Visns 155 is a signal with a positive slope. Visns 155 crosses the error voltage Verror 153, if the error voltage Verror 153 is in the range which is covered by the sensed saw wave voltage Visns 155 during a clock cycle (i.e. during a commutation cycle).

In the converter system 100 of Fig. 1, the sensed saw wave voltage Visns 155 is compared to the error voltage Verror 153 to generate the pulse width modulated signal pwm towards the driver and controller 115 of the buck converter 110. In case of a load transient (e.g. a sudden increase of the load current), the sensed current Isns 160 increases, thereby increasing the slope of the sensed saw wave voltage Visns 155. At the same time, the output voltage Vout 150 may drop, leading to an increase of the error voltage Verror 153. Both effects tend to move forward the trigger point for the pulse width modulated signal pwm, thereby increasing the duty cycle of the buck converter 110 and thereby compensating the effect of the load transient. Nevertheless, in cases of fast transients and/or in cases where the buck converter 110 is already operating at a 100% duty cycle, the buck converter 110 may not be able to stabilize the output voltage Vout 150 at a sufficient speed. In particular, the regulated buck converter 110 may not be able to prevent output voltage drop-outs and/or output voltage transients.

For this purpose, the converter system 100 of Fig. 1 comprises an additional bypass transistor 101 (e.g. a bypass transistor such as a PMOS transistor) to bypass the buck converter 110 in cases of load transients and/or in cases of high duty cycles of the buck converter 110. The bypass transistor 101 may directly link the load to the input voltage 154 in cases of load transients and/or in cases of high duty cycles (e.g. 100% duty cycles). In particular, the bypass transistor 101 may be put into an on-state in situations where dips in the output voltage Vout 154 are detected. For this reason, the on- and off-states of the bypass transistor 101 may be controlled using the error voltage Verror 153 derived from the output voltage Vout 150. In general terms, it may be stated that the bypass control unit 102 controls the on- and off-state of the bypass transistor 101 based on the feedback voltage 151 and/or based on the error voltage 153. As indicated above, the error voltage 153 may be compared to a constant reference voltage, and the bypass transistor 101 may be controlled depending on the comparison of the error voltage 153 and the reference voltage.

The control of the bypass transistor 101 based on the feedback voltage Vfb 151 alone may lead to an unstable behaviour of the bypass transistor 101 (and to an unstable behaviour of the entire converter system 100), as well as to excessive output voltage ripple. It is therefore proposed in the present document, to - alternatively or additionally - control the bypass transistor 101 based on the current through the high side switch 112 of the buck converter 110 (which corresponds to the inductor current during the on-state of the high side switch 112). In other words, it is proposed to - alternatively or additionally - control the bypass transistor 101 based on the sensed current Isns 160.

Fig. 1 illustrates an example current feedback loop 107 for controlling the bypass transistor 101. The error amplifier voltage Verror 153 of the buck converter 110, after an optional analogue operation in unit 105 (e.g. after an optional level shifting), is fed to the input of a bypass error amplifier 106 or a bypass (hysteretic) comparator 106. The current Isns 160 sensed at the high side switch 112 of the buck converter 110, summed up with a compensation ramp (provided by the saw wave generator116), is fed into a peak detector 103. In other words, the sensed saw wave voltage Visns 155 which is derived from the sensed current Isns 160 and a saw wave signal may be used as a current feedback for the control of the bypass transistor 101. The sensed saw wave voltage Visns 155 is then processed by the peak detector 103.

The peak detector 103 may further include analogue operations similar to the operation unit 105 (e.g. for level shifting). Furthermore, the peak detector 103 may apply a decay function (with a particular decay constant) to the detected peak voltage. The peak detector 103 may be reset by an additional reset unit 104 depending on the operating condition (e.g. load expired). This may improve the discharge speed of an internal capacitance in the peak detector 103. The peak voltage 156 derived from the sensed saw wave voltage Visns 155, i.e. derived from the sensed current Isns 160, is then fed to the other input of the bypass error amplifier or bypass comparator 106 and compared to the (level shifted) error voltage Verror 153.

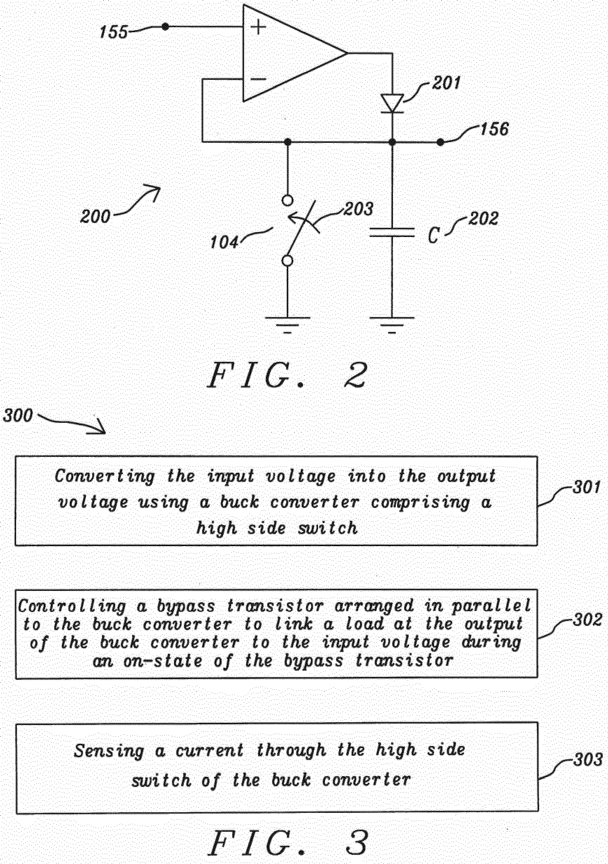

The peak detector 103 is configured to detect maximum values of the sensed saw wave voltage Visns 155 and to (more or less) maintain the peak voltage 156 voltage at the detected maximum value. As such, the peak voltage 156 takes on the maximum values of the sensed saw wave voltage Visns 155 within a pre-determined preceding time interval. The peak detector 103 may be implemented as a series connection of a diode 201 and a capacitor 202 (see Fig. 2), outputting a DC voltage (the peak voltage 156) equal to the peak value of the applied oscillating signal (the sensed saw wave voltage Visns 155). The capacitor 202 may be used to provide the decay function of the peak detector 103. In other words, the peak detector 103 may be used for detecting peak levels of the sensed saw wave voltage Visns 155. The capacitor 202 of the peak detector 103 is used to keep the peak voltage level of the sensed saw wave voltage Visns 155 and determines the decay constant of the peak detector 103. A switch 203 can be used for resetting the detected level. A circuit diagram 200 of an example peak detector is illustrated in Fig. 2.

Th error amplifier or bypass comparator 106 of the feedback loop 107 is in charge of detecting the condition for which the peak voltage 156 derived from the sensed current Isns 160, is not able to cross or get close enough to the error voltage Verror 153 (possibly level shifted by the operation unit 105). In other words, the bypass error amplifier or bypass comparator 106 detects situations where the peak voltage 156 deviates from the (level shifted) error voltage Verror 153. In yet other words, the bypass error amplifier or bypass comparator 106 detects situations where the buck converter 110 cannot provide sufficient load current (detected via the sensed current Isns 160) in order to maintain the desired load voltage (i.e. the output voltage 151). Such situations may occur e.g. for the following reasons:
- A high duty cycle operation of the buck converter 110 does not allow for a static high current in the buck converter 110, due too a high impedance (caused by the PMOS transistor 112 and the inductor 113). A high duty cycle means a high output voltage, and consequently a low drop-out voltage. With a low drop-out voltage the coil 113 can be charged up to a current where the overall high side switch 112 (e.g. the PMOS transistor 112) and coil 113 resistance generates a voltage drop with this current which corresponds to the complete drop-out voltage available at the output. The buck converter 110 cannot deliver more current than this maximum current which depends on the drop-out voltage. Hence, the buck converter 110 is not able to provide the requested load current. Moreover, if the high side switch 112 is switched off for any reason (e.g. noise, current loop jitter), even for a very short time, the low side switch 111 is switched on, which starts to discharge rapidly the coil 113. This leads to a coil voltage drop which is relatively high in the negative direction.
- The compensation of load transients at high duty cycle are typically slow, due to a limited charging voltage across the inductor 113, thereby causing an output voltage dip. In other words, the buck converter, when operated at high duty cycle, only reacts slowly to load transients, and cannot adapt the load current sufficiently fast, in order to compensate for the load transient. This results in the error voltage Verror 153 bumping up rapidly, while the sensed current 160 (and by consequence the peak voltage 156) only increases relatively slowly.
- Very fast load transients at a speed faster than the physical charging speed of the inductor 113, wherein such a high speed of the load transients is not supported by sufficient output capacitance 114. Hence, the buck converter is not able to provide the load current at the required speed.

In the above mentioned situations, the buck converter 110 (an by consequence the entire converter system 100) is operated in an open (regulation) loop. This open loop can be closed via an appropriate control of the bypass transistor 101. The above mentioned situations may lead to a gap (i.e. an error signal 157) between the (level shifted) error voltage 153 and the peak voltage 156 (derived from the current through the high side switch 112). This error information is used to drive the bypass circuitry (comprising the bypass driver 102 and the bypass transistor 101) either in an analogue or in a switching mode. In case of an analogue mode, the bypass transistor 101 is used in linear mode to smoothly control the amount of current supplied to the load. The current through the bypass transistor 101 can be regulated (i.e. increased and/or decreased) based on the needs of the load. The analogue mode can be implemented by using a bypass error amplifier 106, thereby providing an analogue (continuous) error signal 157 towards the bypass controller & driver 102. In case of the switching mode, the bypass transistor 101 is controlled in a digital on / off manner, either supplying current or not supplying current. The switching mode can be implemented by using a bypass comparator 106, thereby providing a binary error signal (on / off) 157 towards the bypass controller & driver 102.

Once the bypass transistor 101 is turned on, at least two conditions may follow in steady state condition, depending on the capability of the buck converter 110:
- Once the output voltage Vout 150 has recovered, the peak voltage 156 derived from the sensed current Isns 160 plus the compensation ramp signal may again be close to the (level shifted) error voltage 153, causing the bypass transistor 101 to be switched off.
- The buck converter 110 may not be able to deliver the total amount of requested load current, so the bypass transistor 101 keeps staying on providing the missing current portion, in order to stay in regulation, compatibly with its power limitation. The bypass transistor 101 stays on as long as needed, due to the fact that the (level shifted) error voltage Verror 153 remains above the peak voltage 156 derived from the sensed current Isns 160.

Hence, by controlling the bypass transistor 101 based on the current through the high side switch 112 of the buck converter 110, it can be ensured that the bypass transistor 101 stays on in situations where the desired load current cannot be provided through the buck converter 110 alone. Such a situation can be detected based on a difference between the error voltage 153 and a peak voltage 156 derived from the current through the high side switch 112. Furthermore, situations of insufficient load currents (subsequent to load transients) can be detected more rapidly, as a result of controlling the bypass transistor 101 based on the current through the high side switch 112. This results in shorter reaction times of the bypass transistor 101, thereby increasing the regulation speed of the converter system 100 shown in Fig. 1. Overall, the use of a current feedback to control the bypass transistor 101 results in a stabilized operation of the buck converter system 100 and in reduced output voltage ripple.

Fig. 1 illustrates a DC-to-DC converter "open loop detector". The PWM modulation for determining the signal "pwm" in Fig. 1 is performed with an added ramp (reference numeral 116), which may compensate the current loop stability in the DC-to-DC converter 110. In order to use the bypass 101 only when required, an open loop detector can detect when the voltage Visns 155 is not able to reach the error voltage (i.e. 100% duty cycle, wherein the PWM modulation is always high). This means that the DC-to-DC converter cannot further increase the current to react to an output voltage drop. This situation automatically triggers the bypass control, since the peak detector 103 is typically able to quickly detect such a situation. Moreover during load transients at less than 100% duty cycle, the peak detector 103 allows to recognize when the error voltage 153 starts deviating from the previous steady state, which was close to the previous steady state in the peak detection. If the peak is slower than the increase of the error voltage153, due to a limited slope of Visns 155, the bypass control 107 steps in, forcing the error voltage 153 to rise slower.

It should be noted that the current feedback loop 107 illustrated in Fig. 1 is only one possible way of implementing a current feedback for controlling the bypass transistor 101.

Fig. 3 illustrates a flow diagram of an example method 300 for converting an input voltage into an output voltage using a controlled bypass transistor of a DC-to-DC converter (e.g. a buck converter). The method 300 comprises converting 301 the input voltage into the output voltage using a buck converter comprising a high side switch. The method 300 proceeds in controlling 302 a bypass transistor arranged in parallel to the buck converter to link a load at the output of the buck converter to the input voltage during an on-state of the bypass transistor. In addition, the method 300 comprises sensing 303 a current through the high side switch of the buck converter. The controlling 302 of the bypass transistor is performed based at least on the sensed current through the high side switch. Typically, the sensed current is processed in order to provide a voltage value which is compared with the error voltage derived from the load (or output) voltage. The processing of the sensed current may comprise the adding of a saw wave signal and the conversion into a corresponding voltage signal (e.g. the sensed saw wave voltage Visns 155). Furthermore, the processing may comprise the detection of peaks in the corresponding voltage signal, thereby yielding e.g. the peak voltage 156 which is compared to the (level shifted) error voltage 153.

Fig. 4 illustrates a DC-to-DC converter in conjunction with a high side bypass transistor 101 and a low side bypass transistor 401. The regulation aspects (e.g. based on the current feedback and/or based on the output voltage feedback) outlined in the present document are also applicable to the power converter system 400 of Fig. 4. In particular, the regulation aspects outlined in the context of the (high side) bypass transistor 101 are also applicable in the context of an additional or a standalone low side bypass transistor 401.

The low side bypass transistor 401 is arranged in parallel to a load 450 connected to the power converter system 400 (i.e. in parallel to the capacitor 114 of the example buck converter 110 comprised in the converter system 400). The low side bypass transistor 401 is configured to couple the load 450 (i.e. the output voltage 150) to ground. The bypass transistors 101, 401 may be implemented as NMOS, PMOS or PNP transistors.

The low side bypass transistor 401 is controlled using a low side bypass controller & driver 402 which may be operated as outlined in the context of the (high side) bypass controller & driver 102. The driver signal (i.e. the gate signal) of the low side bypass transistor 401 may be generated based on the error voltage 153, based on the output voltage 150, based on the sensed current 160 at the high side switch 112 of the DC-to-DC converter 110, and/or based on the sensed current 460 at the low side switch 111 of the DC-to-DC converter 110. The sensed current 460 at the low side switch 111 (referred to in short as low side sensed current 460, as opposed to the sensed current 160 at the high side switch 112, which is referred to as the high side sensed current 160) is determined using a low side current sensing unit 420 (implemented e.g. as a current mirror). The control mechanisms outlined in the context of the high side bypass controller & driver 102 are equally applicable to the low side bypass controller & driver 402.

In the following, various aspects of the power converter system 400 will be described. As can be seen in Fig. 4, bypass transistors 101, 401 can be used in DC-DC step-down converters 110 in the following ways: as a high side bypass 101, providing a direct charge path from the supply voltage 154 to the output capacitance 114, and/or as a low side bypass 401, providing a direct discharge path from the output capacitance 114 to ground. The high side bypass 101 may be mainly used for improving the performance of the power converter system 400 at (close to) 100% duty cycle, since the DC-DC step-down converter 110 typically has limited static and dynamic capability when running at low voltage drop-outs. Furthermore, the high side bypass transistor 101 may be used for improving the DC-to-DC step-down converter's 110 response to a positive load dump, by bypassing the physical speed limitation of the coil 113 for the short time needed for the converter control 102 to recover from the load dump. The low side bypass 402 can be used e.g. for reducing a voltage overshoot (i.e. an overshoot of the output voltage 150) after a load dump. This may be particularly important at low duty cycles of the DC-to-DC step-down converter 110.

As outlined above, the high side bypass transistor (e.g. a transistor) 101 may be controlled in such a way that the high side bypass transistor 101 is driven as a switch by an inverter chain. Alternatively or in addition, the current limit control and the bypass enable of the high side bypass transistor 101 may be based on the drop-out voltage at the DC-to-DC converter. This, however, may be disadvantageous in that the switch current of the high side bypass transistor 101 may develop very fast, inducing a significant supply noise. Furthermore, the output voltage 150 may recover too fast, thereby increasing the ripple. In addition, the current limit defined on the voltage drop-out with highest bypass overdrive may reduce the operational area in which the bypass transistor may be beneficial to improve load transients.

Furthermore, as also outlined above, the enable thresholds used to control the bypass transistors 101, 401 are typically static values, which are either compared to the feedback voltage 151 or to the error voltage 150. A control based solely on the feedback voltage 151 or on the error voltage 150 does not take into account the current loop of the DC-to-DC converter 110, which may lead to a use of the bypass transistors 101, 401 when the bypass transistors 101, 401 are not effectively needed. The present document and in particular the circuit arrangements described in Figs. 1, 4 and 5 may be used to overcome the above mentioned shortcomings.

The low side / high side bypass regulated controlled architecture 400 of Fig. 4 may be used to improve the performance of a DC-to-DC step-down converter 110 in terms of output voltage accuracy (when submitted to a dynamic and/or a static load). In other words, the additional use of a high side bypass transistor 101 and/or a low side bypass transistor 401 may lead to an improved output voltage 150 accuracy of the DC-to-DC step-down converter 110 in terms of a fast dynamic response, static operation and ripple. This may be achieved by appropriately controlling the high side bypass transistor 101 and/or a low side bypass transistor 401 based on any one or more of: the error voltage 153, the output voltage 150, the high side sensed current 160 and the low side sensed current 460 (as illustrated by the bypass control & driver units 102, 402 of Fig. 4). Examples for improved bypass transistor control architectures have been described above (notably in the context of Fig. 1). These control architectures are applicable for controlling the low side switch 402 and/or for controlling the high side switch 101.

It should be noted that the low/high side bypass architecture 400 also works with multiphase DC-to-DC step-down converters (having e.g. a plurality of parallel high side transistors 112 and/or a plurality of parallel low side transistors 111, which may be operated at different commutation cycles). Furthermore, it should be noted that in particular the use of a low side bypass transistor 402 may also work with multiphase or standalone DC-to-DC step-up converters.

The bypass circuitry (comprising the high side bypass transistor 101 and/or the low side bypass transistor 401 and the corresponding control & driver units 102, 402) can work standalone or correlated to the DC-to-DC converter 110 circuitry (or vice versa). By way of example, the control & driver unit 115 of the DC-to-DC converter 110 and the control & driver units 102, 402 of the bypass transistors 101, 401 may exchange control information in order to operate in a coordinated manner. This is illustrated by the communication links 430, 432 of Fig. 4.

The bypass (i.e. the high side bypass transistor 101 and/or the low side bypass transistor 401) to the DC-to-DC controller 110 may be implemented as a source/emitter follower or as a common source/emitter (e.g. a class B amplifier with a cross over region). This can make the bypass circuitry act as an amplifier (a linear or a pulsed amplifier) in combination with the DC-to-DC converter 110. As outlined above, the bypass architecture (i.e. notably the bypass control & driver units 102, 402) can have as analogue control inputs the voltage feedback 151 and/or the current sensed from the low side switch 111 (i.e. the low side sensed current 460) and/or the current sensed from the high side switch 112 (i.e. the high side sensed current 160).

In an embodiment, the low side bypass transistor control is activated by an overvoltage detection system. In other words, the low side bypass transistor 401 may be activated (i.e. switched to the on-state) if it is detected that the output voltage 150 exceeds a pre-determined voltage threshold. This situation may be detected by the bypass control & driver unit 402 e.g. based on the error voltage 153 or directly based on the feedback voltage 151 (i.e. the output voltage 150). The closing (on-state) of the low side bypass transistor 401 leads to a discharging of the capacitor 114 and consequently to a reduction of the output voltage 150.

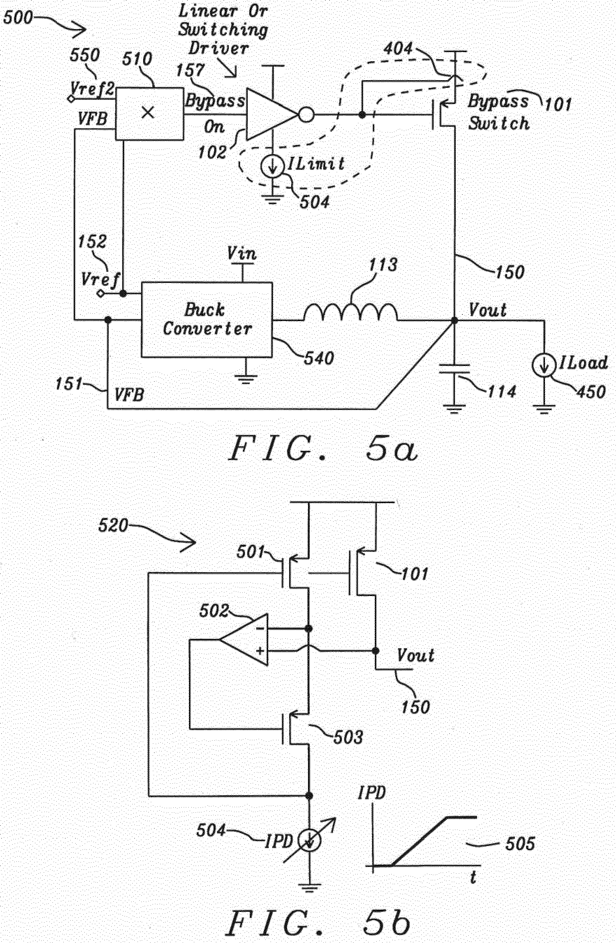

The high side bypass transistor 101 and/or the low side bypass transistor 401 may be provided with a power limit control. The power limit control may be configured to decrease the bypass current limit while the drain-source voltage is increased, thus keeping the respective bypass transistor 101, 401 in the safe operating area. Such a power limit control can make use of bypass current sensing means 404, 403 of the respective bypass transistor 101, 401 (as illustrated in Fig. 4). The use of the sensed bypass current for controlling the bypass transistors 101, 401 is illustrated in further detail in the context of Figs. 5a to 5d.

Alternatively or in addition, the high side bypass transistor 101 and/or the low side bypass transistor 401 may have a controlled current slew rate (current limit control). The current slew rate may be controlled by controlling the rate of increase / decrease of the gate voltage of the respective bypass transistor 101, 401. The power converter system 400 may comprise bypass current sensing means 403, 404 for sensing the current through the low side bypass transistor 401 and the high side bypass transistor 101, respectively. The bypass current sensing means 403, 404 may be implemented e.g. as current mirrors. The sensed bypass current may be provided to the respective bypass control & driver unit 102, 402. As such, the sensed bypass current may be used to control the gate voltage of the respective bypass transistor 101, 401, thereby controlling the current slew rate of the respective bypass transistor 101, 401.

The control of the bypass current (i.e. the current through the respective bypass transistor 101, 401) may be used for controlling the charge and/or discharge of the output capacitor 114. In particular, the high side bypass transistor 101 may be used for a controlled charging of the capacitor 114 and the low side bypass transistor 401 may be used for a controlled discharging of the capacitor 114. As such, the bypass circuitry can either compensate the DC-to-DC converter's charge/discharge activity or the bypass circuitry can take over the complete charge/discharge activity of the capacitor 114.

Alternatively or in addition, the control of the bypass current can be used deliberately as current limit protection for the DC-to-DC converter 110 (notably for the switches 111, 112 and the coils 113). The bypass circuit (comprising the high side bypass transistor 101 and/or the low side bypass transistor 401) can take over the additional required current and act conveniently as an average current limit for the DC-to-DC converter. This means that the high side and/or low side bypass transistor 101, 401 can be controlled in such a way that the current provided by the DC-to-DC converter 110 (measured e.g. via the high side sensed current 160 and/or via the low side sensed current 460) does not exceed a pre-determined current threshold. This can be achieved by taking into account the high side sensed current 160 and/or the low side sensed current 460 in the respective bypass control & driver units 102, 402.

The low-side bypass transistor 401 may be used for negative current blocking in order to further protect the low side switch 111 of the DC-to-DC converter 110 (e.g. to protect the low side switch 111 of the DC-to-DC converter 110 against snap-back). This can be achieved by considering the low side sensed current 460 for the control of the low side bypass transistor 401 (e.g. within the bypass control & driver unit 402). The DC-to-DC converter 110 may be left in tristate or switching at low current.

The high/low side bypass circuitry (i.e. notably the respective control & driver units 102, 402) may have a communication interface 431, 433 with the load circuitry 450 (e.g. a one directional interface from the load 450 to the unit 102, 402, or a bi-directional interface). By way of example, the load 450 may inform the bypass circuitry of an upcoming load transient, thereby enabling the bypass circuitry to prepare for the upcoming load transient. Alternatively or in addition, the high/low side bypass circuitry may have a (bi-directional) communication interface 430, 432 with the DC-to-DC converter control unit 115, in order to coordinate their activities. This communication interface 430, 432 may be used for the exchange of digital and/or analogue control information.

The use of a peak detector 103 on the current feedback control path of the high side bypass transistor 101 has been described in the context of Fig. 1. A similar current feedback control path comprising a peak detector 103 can be used for controlling the low side bypass transistor 401. The peak detector 103 may be used to generate a peak voltage 156. The difference of the peak voltage 156 and the error voltage 153 may be used to modulate the high or low side bypass transistor current.

Alternatively or in addition, a valley detector may be used on the high/low side current sensing path (including a compensation ramp 117) in the DC-DC converter 110, thereby yielding a valley voltage (similar to the peak voltage 156). The difference of the valley voltage with the error voltage 153 may be used to modulate the high and/or low side bypass transistor 101, 401.

Figs. 5a and 5b illustrate an example bypass control & driver unit 102, 402 with gate balanced control by means of a current feedback and a current limited pull-down. The bypass control & driver unit 102, 402 may be used for the high side bypass transistor 101 and/or for the low side bypass transistor 401. The driver unit 102, 520 shown in Figs. 5a and 5b may be used to ensure a reduced switch current development at the respective bypass transistor 101, 401, which reduces the supply noise. Furthermore, the driver unit 102, 520 may be used to provide a reduced output voltage 150 recovering speed, which reduces the ripple. In addition, the driver unit 102, 520 may be used to ensure an operation of the respective bypass transistor 101, 401 within the safe operation area.

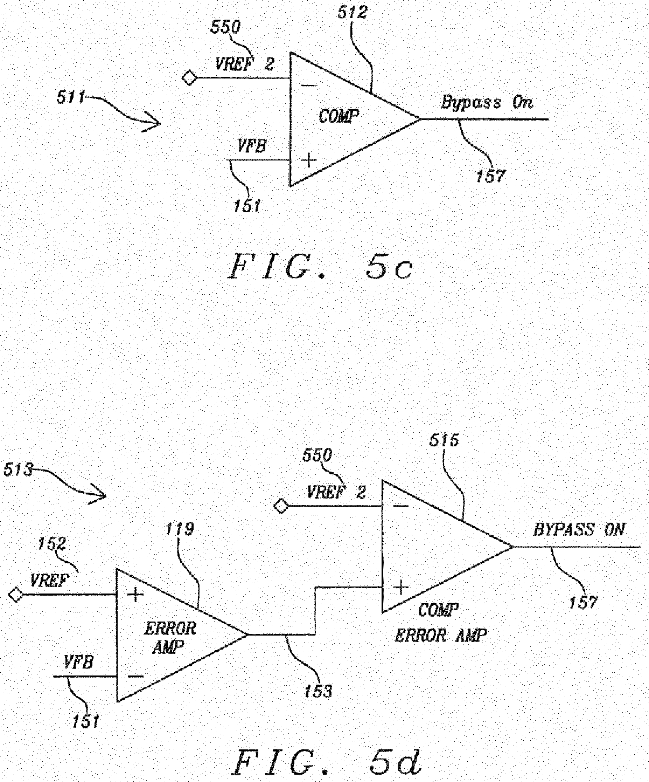

Fig. 5a shows a DC-to-DC converter 540 and the corresponding inductor 113 and capacitor 114. The DC-to-DC converter 540 comprises e.g. the switches 111, 112 and the driver unit 115 of Fig. 1. Furthermore, Fig. 5a shows the high side bypass transistor 101 and its controller & driver unit 102. It should be noted that Figs. 5a to 5d are equally applicable to a low side bypass transistor 401. In the example power converter 500, the bypass transistor 101 is regulated using a feedback unit 510 which determines an error signal 157 as an input to the control & driver unit 102. In the illustrated example, the error signal 157 is determined based on a second reference voltage 550, the feedback voltage 151 and the reference voltage 152, e.g. according to the circuit diagrams shown in Figs. 5c and 5d. These circuit diagrams comprise the comparator or differential amplifiers 512, 550. Alternatively or in addition, the feedback unit 510 may be designed in accordance to the current feedback unit 107 illustrated in Fig. 1.

The power converter 500 of Fig. 5a further comprises bypass current sensing means 404 which sense the current through the bypass transistor 101. It is proposed in the present document to extend the functional area of the bypass transistor 101, by means of an analogue or digital control of its gate. This is obtained by feeding back a sensed current replica (sensed by the sensing means 404) on the gate node, and by driving the gate node with a limited pull-down current driver 504, which can be driven either linearly or digitally, based on the feedback voltage processing. This approach allows the bypass transistor 101 to be activated also during positive load transients, with a reduced current generation speed, and a reduced current peak, thus reducing the noise on the supply and reducing the output voltage ripple.

In switching operation of the bypass transistor 101, the bypass transistor 101 may deliver current pulses which will re-charge the output capacitor 114. In linear operation of the bypass transistor 101, the current will be delivered more or less continuously.

An example driver unit 520 for driving the gate node of the bypass transistor 101 with a limited pull-down current driver 504 is illustrated in Fig. 5b. The bypass current sensing means 404 is implemented using a current mirror comprising a second switch (e.g. transistor) 501. The voltage drop at the differential amplifier 502 is compared with the output voltage 150, and the difference voltage is used to control a switch (e.g. a transistor) 503. The current source 504 is controllable (e.g. as shown in diagram 505). The loop tries to force both transistors 101 and 501 to operate with the same drain-source voltage. The current in transistor 501 is forced to be equal by Kirchhoff law to the current provided by the current source 504, which means that knowing the design ratio of transistors 101 and 501 (i.e. the amplification ratio of the current mirror comprising the transistors 101 and 501), the current in the bypass transistor 101 is a scaled replica of the current provided by the current source 504. Consequently, by controlling the current provided by the current source 504, the current in the bypass transistor 101 can be controlled.

It should be noted that the concept of driving the gate node of the bypass transistor 101 with a limited pull-down current driver 504 can also be used to implement a_power limit control method, which varies the pull-down current limit according to the drop-out voltage, and for implementing a complex pull-down current limit control for reduced supply noise.

Overall, a power converter system comprising a DC-to-DC converter in combination with a high side bypass transistor and/or a low pass bypass transistor has been described. The power converter system can be controlled in order to improve the output voltage accuracy in terms of fast dynamic response, static operation and ripple. An appropriate power control system can be implemented to ensure that the bypass transistors are operated in the safe operating area. Furthermore, operation of the DC-to-DC converter switches and coils in the safe operating area can be ensured by means of appropriate bypass transistor activation. In addition, the bypass transistors may be used to support fast load transients, as well as output charging and discharging. Furthermore, improved supply and/or ground noise related to the bypass transistor activation can be provided.

It should be noted that the description and drawings merely illustrate the principles of the proposed methods and systems. Those skilled in the art will be able to implement various arrangements that, although not explicitly described or shown herein, embody the principles of the invention and are included within its scope. Furthermore, all examples and embodiment outlined in the present document are principally intended expressly to be only for explanatory purposes to help the reader in understanding the principles of the proposed methods and systems. Furthermore, all statements herein providing principles, and embodiments of the invention, as well as specific examples thereof, are intended to encompass equivalents thereof.

## Claims

1. A power converter (100) configured to convert an input voltage (154) at an input of the power converter (100) into an output voltage (150) at an output of the power converter (100), wherein the power converter (100) comprises
- a DC-to-DC converter (110) comprising a high side switch (112);
- a bypass transistor (101) parallel to the DC-to-DC converter (110), configured to couple a load at the output of the power converter (100) to the input voltage (154) during an on-state of the bypass transistor (101);
- current sensing means (120) configured to sense a current (160) through the high side switch (112);
- a voltage error detection unit (119) configured to determine an error voltage (153) based on the output voltage (150) and a reference voltage (152);
- a saw wave signal generation unit (116) configured to generate a saw wave signal at a cycle rate of the DC-to-DC converter (110);
- adding means (117) configured to determine a feedback voltage (155) by overlaying the saw wave signal and a voltage derived from the sensed current;
- a peak detector (103) configured to determine a peak voltage (156) from the feedback voltage (155), such that the peak voltage (156) takes on a maximum value of the feedback voltage (155) within a predetermined preceding time interval;
- a difference unit (106) configured to compare the error voltage (153) with the peak voltage (156), to provide an output (157) of the difference unit (106) which indicates a situation where the DC-to-DC converter (110) cannot provide sufficient current to the load at the output of the power converter (100) to maintain a desired output voltage (150); and
- a bypass control and driver unit (102) which is coupled to the output of the difference unit (106); wherein the bypass control and driver unit (102) is configured to apply a drive signal to a gate of the bypass transistor (101) to turn on the bypass transistor (101), based on the output (157) of the difference unit (106); wherein, if the bypass transistor (101) is turned on, a current through the bypass transistor (101) is provided to the load at the output of the power converter (100) in addition to the current provided by the DC-to-DC converter (110).

2. The power converter (100) of claim 1, further comprising
- a reset unit (104) configured to reset the peak detector (103), subject to receiving a reset command.

3. The power converter (100) of any previous claim, further comprising a leveling unit (105) configured to adjust a level of the peak voltage (156).

4. The power converter (100) of any previous claims, wherein the difference unit (106) is an operational amplifier and wherein the output (157) of the difference unit (106) is an analogue signal used to control the bypass transistor (101) to provide an adjustable current to the output of the power converter (100).

5. The power converter (100) of any of claims 1 to 3, wherein difference unit (106) is a comparator and wherein the output (157) of the difference unit (106) is a binary signal used to control the on-state and an off-state of the bypass transistor (101).

6. The power converter (100) of any previous claim, further comprising a pulse generation unit (118) configured to determine a duty cycle of the high side switch (112) of the DC-to-DC converter (110) based on the output voltage (150).

7. The power converter (100) of any previous claim, wherein the bypass control and driver unit (102) is configured to control the bypass transistor (101) in an analogue mode and/or in a binary switching mode; wherein
- in the analogue mode a current through the bypass transistor (101) is controlled in a continuous manner; and
- in the binary switching mode the current through the bypass transistor (101) is controlled in a digital, on/off, manner.

8. The power converter (100, 400) of any previous claim, wherein
- the DC-to-DC converter (110) comprises a low side switch (111);
- the power converter (100, 400) further comprises a second bypass transistor (401) parallel to the DC-to-DC converter (110); and
- the second bypass transistor (401) is configured to couple a load at the output of the power converter (100, 400) to ground during an on-state of the second bypass transistor (401).

9. A method for converting an input voltage (154) into an output voltage (150), wherein the method comprises
- converting the input voltage (154) into the output voltage (150) using a DC-to-DC converter (110) comprising a high side switch (112);
- controlling a bypass transistor (101) parallel to the DC-to-DC converter (110) to couple a load at an output of the DC-to-DC converter (110) to the input voltage (154) during an on-state of the bypass transistor (101); and
- sensing a current (160) through the high side switch (112);
- determining an error voltage (153) based on the output voltage (150) and a reference voltage (152);
- generating a saw wave signal at a cycle rate of the DC-to-DC converter;
- determining a feedback voltage (155) by overlaying the saw wave signal and a voltage derived from the sensed current;
- determining a peak voltage of the feedback voltage, such that the peak voltage (156) takes on a maximum value of the feedback voltage (155) within a predetermined preceding time interval;
- comparing the error voltage (153) with the peak voltage (156) using a difference unit (106) to provide an output (157) of the difference unit (106) which indicates a situation where the DC-to-DC converter (110) cannot provide sufficient current to the load to maintain a desired output voltage (150); and
- applying a drive signal to a gate of the bypass transistor (101) to turn on the bypass transistor (101), based on the output (157) of the difference unit (106); wherein, if the bypass transistor (101) is turned on, a current through the bypass transistor (101) is provided to the load at the output of the power converter (100) in addition to the current provided by the DC-to-DC converter (110).

## Patentansprüche

1. Leistungswandler (100), der dazu ausgestaltet ist, eine Eingangsspannung (154) an einem Eingang des Leistungswandlers (100) in eine Ausgangsspannung (150) an einem Ausgang des Leistungswandlers (100) umzuwandeln, wobei der Leistungswandler (100) umfasst:
- einen Gleichstromwandler (110), der einen High-Side-Schalter (112) umfasst;
- einen Überbrückungstransistor (101) parallel zu dem Gleichstromwandler (110), der dazu ausgestaltet ist, während eines Ein-Zustands des Überbrückungstransistors (101) eine Last am Ausgang des Leistungswandlers (100) mit der Eingangsspannung (154) zu koppeln;
- Stromerfassungsmittel (120), die dazu ausgestaltet sind, einen Strom (160) durch den High-Side-Schalter (112) zu erfassen;
- eine Spannungsfehlererkennungseinheit (119), die dazu ausgestaltet ist, basierend auf der Ausgangsspannung (150) und einer Referenzspannung (152) eine Fehlerspannung (153) zu bestimmen;
- eine Sägezahnwellensignal-Erzeugungseinheit (116), die dazu ausgestaltet ist, mit einer Taktfrequenz des Gleichstromwandlers (110) ein Sägezahnwellensignal zu erzeugen;
- Addiermittel (117), die dazu ausgestaltet sind, durch Übereinanderlegen des Sägezahnwellensignals und einer Spannung, die von dem erfassten Strom abgeleitet wird, eine Rückführspannung (155) zu bestimmen;
- einen Spitzendetektor (103), der dazu ausgestaltet ist, aus der Rückführspannung (155) eine Spitzenspannung (156) zu bestimmen, derart dass die Spitzenspannung (156) einen Maximalwert der Rückführspannung (155) innerhalb eines vorgegebenen vorhergehenden Zeitraums annimmt;
- eine Differenzeinheit (106), die dazu ausgestaltet ist, die Fehlerspannung (153) mit der Spitzenspannung (156) zu vergleichen, um eine Ausgabe (157) der Differenzeinheit (106) bereitzustellen, die eine Situation anzeigt, in welcher der Gleichstromwandler (110) der Last am Ausgang des Leistungswandlers (100) nicht ausreichend Strom bereitstellen kann, um eine Soll-Ausgangsspannung (150) aufrechtzuerhalten; und
- eine Überbrückungssteuerungs- und Treibereinheit (102), die mit dem Ausgang der Differenzeinheit (106) gekoppelt ist; wobei die Überbrückungssteuerungs- und Treibereinheit (102) dazu ausgestaltet ist, basierend auf der Ausgabe (157) der Differenzeinheit (106) ein Treibersignal an ein Gate des Überbrückungstransistors (101) anzulegen, um den Überbrückungstransistor (101) einzuschalten; wobei, wenn der Überbrückungstransistor (101) eingeschaltet ist, der Last am Ausgang des Leistungswandlers (100) zusätzlich zu dem Strom, der durch den Gleichstromwandler (110) bereitgestellt wird, ein Strom durch den Überbrückungstransistor (101) bereitgestellt wird.

2. Leistungswandler (100) nach Anspruch 1, ferner umfassend:
- eine Rückstelleinheit (104), die dazu ausgestaltet ist, bei Empfang eines Rückstellbefehls den Spitzendetektor (103) zurückzustellen.

3. Leistungswandler (100) nach einem der vorhergehenden Ansprüche, der ferner eine Pegelregelungseinheit (105) umfasst, die dazu ausgestaltet ist, einen Pegel der Spitzenspannung (156) einzustellen.

4. Leistungswandler (100) nach vorhergehenden Ansprüchen, wobei die Differenzeinheit (106) ein Operationsverstärker ist und wobei die Ausgabe (157) der Differenzeinheit (106) ein analoges Signal ist, das benutzt wird, um den Überbrückungstransistor (101) dazu zu steuern, dem Ausgang des Leistungswandlers (100) einen einstellbaren Strom bereitzustellen.

5. Leistungswandler (100) nach einem der Ansprüche 1 bis 3, wobei die Differenzeinheit (106) ein Komparator ist und wobei die Ausgabe (157) der Differenzeinheit (106) ein binäres Signal ist, das benutzt wird, um den Ein-Zustand und einen Aus-Zustand des Überbrückungstransistors (101) zu steuern.

6. Leistungswandler (100) nach einem vorhergehenden Anspruch, der ferner eine Impulserzeugungseinheit (118) umfasst, die dazu ausgestaltet ist, basierend auf der Ausgangsspannung (150) einen Tastgrad des High-Side-Schalters (112) des Gleichstromwandlers (110) zu bestimmen.

7. Leistungswandler (100) nach einem vorhergehenden Anspruch, wobei die Überbrückungssteuerungs- und Treibereinheit (102) dazu ausgestaltet ist, den Überbrückungstransistor (101) in einem Analogmodus und/oder in einem binären Schaltmodus zu steuern; wobei
- in dem Analogmodus ein Strom durch den Überbrückungstransistor (101) auf kontinuierliche Weise gesteuert wird; und
- in dem binären Schaltmodus der Strom durch den Überbrückungstransistor (101) auf digitale, Ein-/Aus-Weise gesteuert wird.

8. Leistungswandler (100, 400) nach einem vorhergehenden Anspruch, wobei
- der Gleichstromwandler (110) einen Low-Side-Schalter (111) umfasst;
- der Leistungswandler (100, 400) ferner parallel zu dem Gleichstromwandler (110) einen zweiten Überbrückungstransistor (401) umfasst; und
- der zweite Überbrückungstransistor (401) dazu ausgestaltet ist, während eines Ein-Zustands des zweiten Überbrückungstransistors (401) eine Last am Ausgang des Leistungswandlers (100, 400) mit Masse zu koppeln.

9. Verfahren zum Umwandeln einer Eingangsspannung (154) in eine Ausgangsspannung (150), wobei das Verfahren umfasst:
- Umwandeln der Eingangsspannung (154) in die Ausgangsspannung (150) unter Benutzung eines Gleichstromwandlers (110), der einen High-Side-Schalter (112) umfasst;
- Steuern eines Überbrückungstransistors (101) parallel zu dem Gleichstromwandler (110) dazu, während eines Ein-Zustands des Überbrückungstransistors (101) eine Last an einem Ausgang des Leistungswandlers (110) mit der Eingangsspannung (154) zu koppeln; und
- Erfassen eines Stromes (160) durch den High-Side-Schalter (112);
- Bestimmen einer Fehlerspannung (153) basierend auf der Ausgangsspannung (150) und einer Referenzspannung (152);
- Erzeugen eines Sägezahnwellensignals mit einer Taktfrequenz des Gleichstromwandlers;
- Bestimmen einer Rückführspannung (155) durch Übereinanderlegen des Sägezahnwellensignals und einer Spannung, die von dem erfassten Strom abgeleitet wird;
- Bestimmen einer Spitzenspannung der Rückführspannung, derart dass die Spitzenspannung (156) einen Maximalwert der Rückführspannung (155) innerhalb eines vorgegebenen vorhergehenden Zeitraums annimmt;
- Vergleichen der Fehlerspannung (153) mit der Spitzenspannung (156) unter Benutzung einer Differenzeinheit (106), um eine Ausgabe (157) der Differenzeinheit (106) bereitzustellen, die eine Situation anzeigt, in welcher der Gleichstromwandler (110) der Last nicht ausreichend Strom bereitstellen kann, um eine Soll-Ausgangsspannung (150) aufrechtzuerhalten; und
- Anlegen eines Treibersignals an ein Gate des Überbrückungstransistors (101), um den Überbrückungstransistor (101) einzuschalten, basierend auf der Ausgabe (157) der Differenzeinheit (106); wobei, wenn der Überbrückungstransistor (101) eingeschaltet ist, der Last am Ausgang des Leistungswandlers (100) zusätzlich zu dem Strom, der durch den Gleichstromwandler (110) bereitgestellt wird, ein Strom durch den Überbrückungstransistor (101) bereitgestellt wird.

## Revendications

1. Convertisseur de puissance (100) configuré pour convertir une tension d'entrée (154) à une entrée du convertisseur de puissance (100) en une tension de sortie (150) à une sortie du convertisseur de puissance (100), dans lequel le convertisseur de puissance (100) comprend
- un convertisseur CC-CC (110) comprenant un commutateur côté haut (112) ;
- un transistor de dérivation (101) parallèle au convertisseur CC-CC (110), configuré pour coupler une charge à la sortie du convertisseur de puissance (100) à la tension d'entrée (154) dans un état actif du transistor de dérivation (101) ;
- un moyen de détection de courant (120) configuré pour détecter un courant (160) passant par le commutateur côté haut (112) ;
- une unité de détection d'erreur de tension (119) configurée pour déterminer une tension d'erreur (153) sur base de la tension de sortie (150) et d'une tension de référence (152) ;
- une unité de génération de signal d'onde en dents de scie (116) configurée pour générer un signal d'onde en dents de scie à une fréquence de cycle du convertisseur CC-CC (110) ;
- un moyen d'addition (117) configuré pour déterminer une tension de rétroaction (155) en superposant le signal d'onde en dents de scie et une tension dérivée du courant détecté ;
- un détecteur de crête (103) configuré pour déterminer une tension de crête (156) de la tension de rétroaction (155), de telle sorte que la tension de crête (156) adopte une valeur maximale de la tension de rétroaction (155) dans un intervalle temporel précédent prédéterminé ;
- une unité de différence (106) configurée pour comparer la tension d'erreur (153) à la tension de crête (156), pour procurer une sortie (157) de l'unité de différence (106) indiquant une situation où le convertisseur CC-CC (110) ne peut pas fournir un courant suffisant à la charge à la sortie du convertisseur de puissance (100) pour maintenir une tension de sortie désirée (150) ; et
- une unité de pilotage et de commande de dérivation (102) couplée à la sortie de l'unité de différence (106) ; dans lequel l'unité de pilotage et de commande de dérivation (102) est configurée pour appliquer un signal de commande à une grille du transistor de dérivation (101) pour activer le transistor de dérivation (101), sur base de la sortie (157) de l'unité de différence (106) ; dans lequel, si le transistor de dérivation (101) est activé, un courant passant par le transistor de dérivation (101) est fourni à la charge à la sortie du convertisseur de puissance (100) en plus du courant fourni par le convertisseur CC-CC (110).

2. Convertisseur de puissance (100) selon la revendication 1, comprenant en outre
- une unité de réinitialisation (104) configurée pour réinitialiser le détecteur de crête (103), qui peut recevoir une commande de réinitialisation.

3. Convertisseur de puissance (100) selon l'une quelconque des revendications précédentes, comprenant en outre une unité d'égalisation (105) configurée pour ajuster le niveau de la tension de crête (156).

4. Convertisseur de puissance (100) selon l'une quelconque des revendications précédentes, dans lequel l'unité de différence (106) est un amplificateur opérationnel et dans lequel la sortie (157) de l'unité de différence (106) est un signal analogique utilisé pour commander le transistor de dérivation (101) pour fournir un courant ajustable à la sortie du convertisseur de puissance (100).

5. Convertisseur de puissance (100) selon l'une quelconque des revendications 1 à 3, dans lequel l'unité de différence (106) est un comparateur et dans lequel la sortie (157) de l'unité de différence (106) est un signal binaire utilisé pour commander l'état actif et un état inactif du transistor de dérivation (101) .

6. Convertisseur de puissance (100) selon l'une quelconque des revendications précédentes, comprenant en outre une unité de génération d'impulsions (118) configurée pour déterminer un rapport cyclique du commutateur côté haut (112) du convertisseur CC-CC (110) sur base de la tension de sortie (150).

7. Convertisseur de puissance (100) selon l'une quelconque des revendications précédentes, dans lequel l'unité de pilotage et de commande de dérivation (102) est configurée pour commander le transistor de dérivation (101) en mode analogique et/ou en mode de commutation binaire ; dans lequel
- en mode analogique, un courant passant par le transistor de dérivation (101) est commandé de manière continue ; et
- en mode de commutation binaire, le courant passant par le transistor de dérivation (101) est commandé numériquement en marche/arrêt.

8. Convertisseur de puissance (100, 400) selon l'une quelconque des revendications précédentes, dans lequel
- le convertisseur CC-CC (110) comprend un commutateur côté bas (111) ;
- le convertisseur de puissance (100, 400) comprend en outre un deuxième transistor de dérivation (401) parallèle au convertisseur CC-CC (110) ; et
- le deuxième transistor de dérivation (401) est configuré pour coupler une charge à la sortie du convertisseur de puissance (100, 400) à la terre durant un état actif du deuxième transistor de dérivation (401).

9. Procédé de conversion d'une tension d'entrée (154) en une tension de sortie (150), dans lequel le procédé comprend
- la conversion de la tension d'entrée (154) en tension de sortie (150) à l'aide d'un convertisseur CC-CC (110) comprenant un commutateur côté haut (112) ;
- la commande d'un transistor de dérivation (101) parallèle au convertisseur CC-CC (110) pour coupler une charge à une sortie du convertisseur CC-CC (110) à la tension d'entrée (154) durant un état actif du transistor de dérivation (101) ; et
- la détection d'un courant (160) passant par le commutateur côté haut (112) ;
- la détermination d'une tension d'erreur (153) sur base de la tension de sortie (150) et d'une tension de référence (152) ;
- la génération d'un signal d'onde en dents de scie à une fréquence de cycle du convertisseur CC-CC ;
- la détermination d'une tension de rétroaction (155) en superposant le signal d'onde en dents de scie et une tension dérivée du courant détecté ;
- la détermination d'une tension de crête de la tension de rétroaction, de telle sorte que la tension de crête (156) adopte une valeur maximale de la tension de rétroaction (155) dans un intervalle temporel précédent prédéterminé ;
- la comparaison de la tension d'erreur (153) à la tension de crête (156) à l'aide d'une unité de différence (106) pour procurer une sortie (157) de l'unité de différence (106) indiquant une situation où le convertisseur CC-CC (110) ne peut pas fournir un courant suffisant à la charge pour maintenir une tension de sortie désirée (150) ; et
- l'application d'un signal de commande à une grille du transistor de dérivation (101) pour activer le transistor de dérivation (101), sur base de la sortie (157) de l'unité de différence (106) ; dans lequel, si le transistor de dérivation (101) est activé, un courant passant par le transistor de dérivation (101) est fourni à la charge à la sortie du convertisseur de puissance (100) en plus du courant fourni par le convertisseur CC-CC (110).
